# EUROPEAN PATENT APPLICATION

(11) **EP 2 023 621 A2**
(43) Date of publication of application: **11.02.2009**
(21) Application number: 08013664.1
(22) Date of filing: 30.07.2008
(51) Int. Cl.: H04N 5/46

(54) **Broadcast receiving apparatus and broadcast receiving method**

(30) Priority: 31.07.2007 JP 2007199456
(71) Applicant: Kabushiki Kaisha Toshiba, Minato-ku, Tokyo 105-8001 (JP)
(72) Inventor: Izumi, Ryusuke, Tokyo 105-8001 (JP)
(74) Representative: HOFFMANN EITLE

(57) **Abstract**

A channel selection section (17) receives a broadcast signal containing analog broadcasting and a broadcast signal containing digital broadcasting and selects one of the broadcast signals. A variable gain amplifier (25) amplifies the selected broadcast signal by a gain in accordance with a gain control signal. A digital broadcast signal demodulation section (33) demodulates a broadcast signal amplified by the variable gain amplifier (25) and provides a value based on a signal level of the broadcast signal, as the gain control signal. An analog broadcast signal demodulation section (28) demodulates analog broadcast signals which are contained in the broadcast signal selected by the channel selection section and which have passed through the filters (26 and 27). The digital broadcast signal demodulation section (28) includes a logical section (33-2) that sets a gain of the variable gain amplifier to have a minimum value if the channel selection section selects the analog broadcasting.

## Description

The present invention relates to a broadcast receiving apparatus and a broadcast receiving method which use a tuner receiving digital broadcasting and analog broadcasting using the same circuit configuration.

As is well-known, with digital techniques prevailing and developing, for example, TV broadcasting utilizes conventional broadcasting based on analog broadcast signals and broadcasting such as terrestrial digital broadcasting which is based on digital broadcast signals. With the digital broadcasting and analog broadcasting prevailing simultaneously, one TV tuner unit is desired to selectively receive the digital broadcasting and the analog broadcasting. For such a TV tuner unit, a technique is known which achieves reception using one broadcast receiving circuit instead of providing individual circuits, that is, a digital broadcast receiving circuit and an analog broadcast receiving circuit.

Jpn. Pat. Appln. KOKAI Publication No. 11-261922 discloses such a broadcast receiving circuit. Jpn. Pat. Appln. KOKAI Publication No. 11-261922 discloses a configuration that disrupts signal transmission and power supply to a digital processing section during reception of analog signals in order to prevent local oscillation signals generated by a local oscillator in a digital processing section from affecting the operation of an analog processing section.

Thus, with the conventional technique, since the signal transmission and power supply to the digital processing section are stopped as described above, when analog broadcast reception is switched to digital broadcast reception, the signal transmission and power supply to the digital processing section are restarted. Consequently, starting of the digital broadcast processing section is delayed. Thus, upon switching the analog broadcasting to the digital broadcasting, a user disadvantageously needs to wait for a certain duration until the digital broadcast processing section starts to operate correctly.

Moreover, with the conventional technique, if a digital demodulation section is operating during the reception of the analog broadcasting, analog intermediate frequency (IF) signals may enter a digital IF line. At this time, the digital demodulation section detects a signal level and feeds a voltage based on the detection level back to a digital IF signal amplifier section as an IF_AGC voltage. In particular, upon reception of a weak electric field, the analog IF signal level decreases, whereas a digital IF signal level increases under the control of an IF/AGC section. An amplification section for the digital IF signal provides a high gain. Consequently, upon the reception of the weak electric field, the signal level of the digital IF signal increases, whereas the signal level of the analog IF signal level decreases relatively. Thus, signals may leak from the digital IF signal line to the analog IF signal line. This may disadvantageously exert a spurious effect to form stripes in videos during analog reception.

An object of the present invention is to provide a broadcast receiving apparatus and a broadcast receiving method which allow digital broadcasting and analog broadcasting to be appropriately received using the same circuit configuration.

To accomplish the object, a broadcast receiving apparatus according to an embodiment comprises a channel selection section 17 which receives a broadcast signal containing analog broadcasting and a broadcast signal containing digital broadcasting and which selects one of the broadcast signals, a variable gain amplifier 25 which amplifies the broadcast signal selected by the channel selection section, in accordance with a gain control signal, a digital broadcast signal demodulation section 33 which demodulates the broadcast signal amplified by the variable gain amplifier and which detects a signal level of the broadcast signal to provide a value based on a result of the detection to the variable gain amplifier as the gain control signal, filters 26 and 27 which allow passage of an analog sound signal and an analog video signal contained in the broadcast signal selected by the channel selection signal, and an analog broadcast signal demodulation section 28 which demodulates the broadcast signals having passed through the filters. The digital broadcast signal demodulation section comprises a restricting section 33-2 which restricts an operation of the variable gain amplifier if the channel selection section selects the analog broadcasting.

When the analog broadcasting is received, an operation of the variable gain amplifier for IF-AGC belonging to a digital broadcast signal processing side is restricted to prevent signals from leaking from a digital IF signal line to an analog IF signal line. As a result, the analog broadcasting and the digital broadcasting can be appropriately received using the same circuit configuration.

The invention can be more fully understood from the following detailed description when taken in conjunction with the accompanying drawings, in which:
FIG. 1 is a block diagram showing an example of the configuration of an analog/digital tuner section according to an embodiment of the present invention;
FIG. 2 is a graph showing an example of an output component from the analog/digital tuner section;
FIG. 3 is a graph showing an example of a variation in the gain of the analog/digital tuner section according to the embodiment of the present invention;
FIG. 4 is a block diagram showing another example of the configuration of the analog/digital tuner section according to the embodiment of the present invention; and
FIG. 5 is a block diagram showing an example of the configuration of an optical disc device using the analog/digital tuner section according to an embodiment of the present invention.

Embodiments of the present invention will be described below in detail with reference to the drawings.

### <Embodiment of the broadcast receiving apparatus>

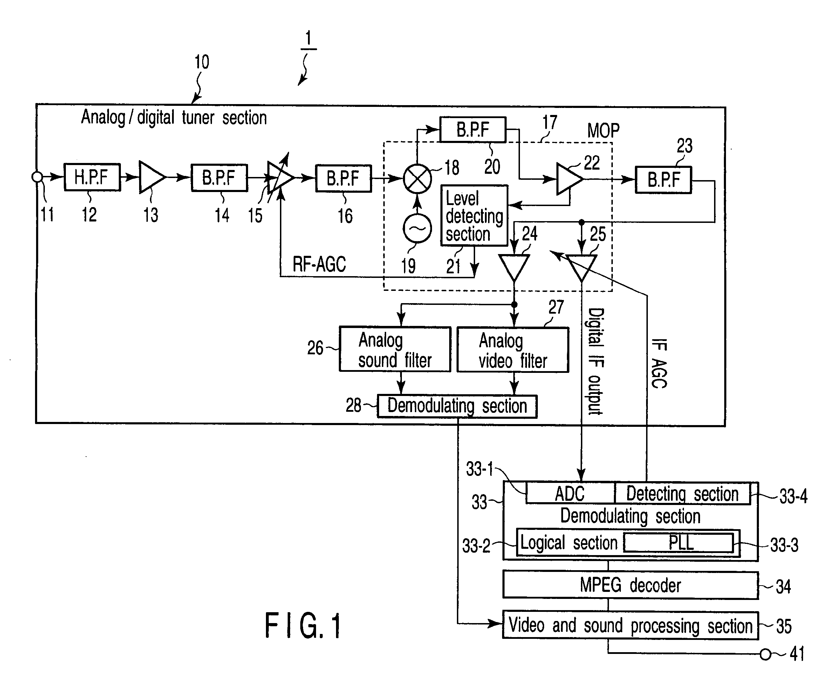

First, with reference to the drawings, a detailed description will be given of an example of the configuration of a broadcast receiving apparatus according to an embodiment of the present invention. FIG. 1 is a block diagram showing an example of the configuration of an analog/digital tuner section according to the embodiment of the present invention.

A broadcast receiving apparatus 1 according to an embodiment of the present invention has an analog/digital tuner section 10, a demodulation section 33 that receives orthogonal frequency-division multiplexing (OFDM) digital signals for digital broadcasting, an MPEG decoder 34 that receives TS signals supplied by the demodulation section 33, a video and sound processing section 35 that receives decoded signals from the MPEG decoder 34 and video and sound signals from the analog/digital tuner section 10, and an output terminal 41 that outputs final video and sound signals.

In this case, by way of example, the demodulation section 33 converts the OFDM signal into a video and sound signal in transport stream (TS) form. The demodulation section 33 has an analog-to-digital converter 33-1 that receives a digital IF output signal from a variable gain amplifier 25 in the analog/digital tuner section 10 to subject the digital IF output signal to analog-to-digital conversion, and a level detection section 33-4 that observes a signal level in the analog-to-digital converter 33-1 to supply an amplification section (gain) control signal (IF AGC) based on the signal level, to the amplifier 25.

The demodulation section 33 further has, by way of example, a logical section 33-2 that converts the OFDM signal into the TS video and sound signal. The logical section 33 executes the converting process in accordance with a timing signal generated by PLL 33-3. The MPEG decoder 34 executes an MPEG decoding process on the TS signal resulting from the conversion to output an original video signal and an original sound signal.

The video and sound processing section 35 selects one of the video and sound signal from the analog/digital tuner section 10 and the video and sound signal from the MPEG decoder 34. That is, the video and sound processing section 35 receives a demodulated signal from a first demodulation section (the demodulation section 33 and MPEG decoder 34) and a demodulated signal from a second demodulation section 28. The video and sound processing section 35 executes video signal processing and sound signal processing on the demodulated signal from the first demodulation section (the demodulation section 33 and MPEG decoder 34) if the channel selection section selects digital broadcasting. The video and sound processing section 35 executes the video signal processing and sound signal processing on the demodulated signal from the second demodulation section 28 if the channel selection section selects analog broadcasting. The video and sound processing section 35 outputs the processed video and sound signal to the output terminal 41.

On the other hand, the analog/digital tuner section 10 reproduces analog broadcast signals and digital broadcast signals using the same circuit configuration. As shown in FIG. 1, the analog/digital tuner section 10 has an input terminal 11 to which broadcast signals are input through an antenna (not shown), a high pass filter 12 that allows high frequency components to pass through, an amplifier 13 succeeding the high pass filter 12, a band pass filter 14 succeeding the amplifier 13, and an automatic gain control (AGC) amplifier 15.

The analog/digital tuner section 10 has a band pass filter 16 succeeding the amplifier 15 and allowing signals of a frequency used to pass through, a channel selection section 17 that selects a broadcast signal from one broadcast station in accordance with an operation signal from an operation section (not shown), and a band pass filter 23 that receives output signals from the channel selection section 17.

The analog/digital tuner section 10 further has, as a configuration for processing analog broadcast signals, an analog sound filter 26 that allows an analog sound signal to pass through, an analog video filter 27 that allows an analog video signal to pass through, and a second demodulation section 28 that demodulates the analog sound signal and the analog video signal.

Moreover, the above-described channel selection section 17 has an oscillating section 19 that generates a local oscillation signal corresponding to a specified channel in accordance with an operation signal from the operation section (not shown) regardless of whether or not the broadcasting is analog or digital, and a mixing section 18 that mixes the local oscillation signal with a signal from the band pass filter 16 to select the specified channel.

The channel selection section 17 further has a band pass filter 20 that filters an intermediate frequency (IF) signal (that is, a broadcast signal for the selected channel) from the mixing section 18, an amplifier 22 that amplifies an output from the filter, a level detection section 21 that detects the level of the output signal from the amplifier 22 to supply a control voltage to the amplifier 15, a variable gain amplifier 25 receiving an output signal from a band pass filter 23 and having a gain adjusting function (AGC), and an amplifier 24 that receives and amplifies an output signal from the band pass filter 23 and then supplies the amplified signal to the analog sound filter 26 and the analog video filter 27.

With this configuration, when for example, the third channel of the analog broadcasting or the tenth channel of the digital broadcasting is specified, the analog digital tuner section 10 allows the channel selection section 17 to select a broadcast signal for the corresponding channel. The selected broadcast signal passes through the amplifiers 24 and 25. For example, an analog broadcast signal is reproduced by the amplifier 24 and the succeeding arrangements. Similarly, a digital broadcast signal is reproduced by the amplifier 25 and the succeeding arrangements.

The amplifier 25, the analog-to-digital converter 33-1, and the level detection section 33-4 constitute an AGC circuit so that a digital IF output signal of an appropriate level is supplied to the analog-to-digital converter 33-1.

### • Adverse effects on analog IF signals

Here, the above-described analog/digital tuner section 10 receives and reproduces one of any analog broadcast signal and any digital broadcast signal in accordance with a user's operation. However, as described below, particularly when the analog broadcasting is received, stripes may disadvantageously be displayed in videos under the effect of a digital broadcasting demodulation side.

That is, during the use of the analog/digital tuner section 10, when the amplifier 25, the demodulation section 33, and the like, belonging to a digital tuner side, are operated during analog reception as in the case of conventional art, an analog intermediate frequency (IF) signal may disadvantageously enter a digital IF line succeeding the amplifier 25. Then, the level detection section 33-4 of the digital demodulation section 33 detects the signal level and feeds an amplification section control signal (IF_AGC) based on the detection voltage, back to the amplifier 25.

In particular, when a weak electric field is received during the analog reception, the analog IF signal level decreases, whereas the amplification section control signal (IF_AGC) is subjected to AGC to raise gain. The amplification section control signal (IF_AGC) provides the increased gain. Thus, upon the reception of the weak electric field, the signal level of the digital IF output signal increases, whereas the signal level of the analog IF signal decreases relatively.

As a result, the signal may leak from the digital IF signal line to an analog IF signal line. This may exert a spurious effect to form stripes in videos during analog reception.

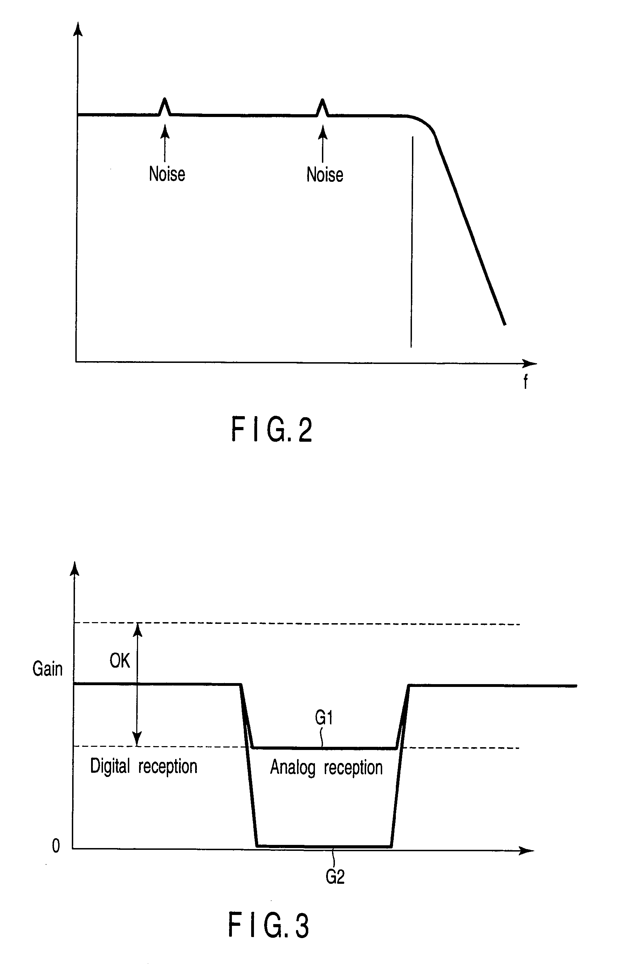

This inconvenient situation can be observed as noise in FIG. 2. FIG. 2 is a graph showing an example of a video output component from the analog/digital tuner section.

### (Measures against noise in analog IF signals)

A detailed description will be given of a specific example of measures taken against noise in analog IF signals by the broadcast receiving apparatus according to the embodiment of the present invention.

The signal level of the amplification section control signal (IF AGC) is set to be minimum.

The amplification section control signal (IF_AGC), output by the level detection section 33-4, is set by the logical section 33-2. Thus, the logical section 33-2 preferably performs control such that signal level of the amplification section control signal (IF_AGC) is set to be minimum.

That is, when the channel selection section selects the analog broadcasting, the logical section 33-2 sets (restricts) the level of the amplification section control signal (IF_AGC), output by the level detection section 33-4, to be minimum to minimize the level of the digital IF output signal. In this manner, the logical section 33-2 functions as restricting means for restricting the operation of the variable gain amplifier 25. This makes it possible to avoid allowing a digital IF output signal to leak into the analog IF signal line. A gain signal G1 in FIG. 3 indicates a gain signal for IF_AGC improved by the above-described method. Thus, the analog broadcasting can be stably reproduced.

The AGC operation of the variable gain amplifier 25 is stopped.

Another preferable method is to stop the AGC operation of the amplifier 25. That is, if the operation of the amplifier 25 is controlled by the logical section 33-2, when the channel selection section selects the analog broadcasting, the logical section 33-2 preferably stops the AGC operation of the amplifier 25. As a result, the gain of the amplifier 25 is minimized.

This makes it possible to avoid possible leakage of signals from the digital IF output signal line to the analog IF signal line. The gain signal G1 in FIG. 3 shows an IF-AGC gain signal improved by the above-described method. Thus, the analog broadcasting can be stably reproduced.

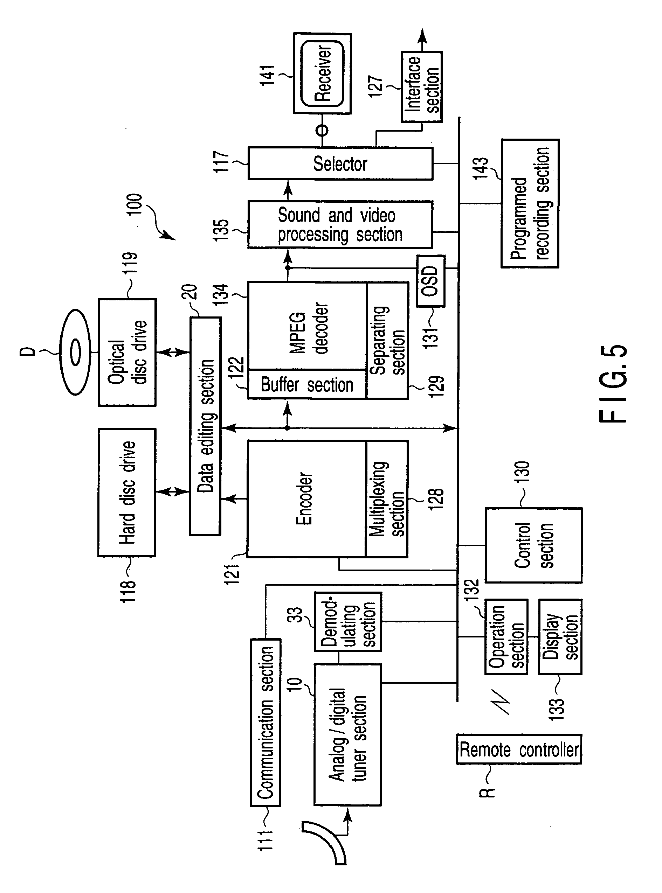

Alternatively, a switch may be provided in an amplification section control signal input section of the amplifier 25 to select one of a minimum gain value and an amplification section control signal. The switch may be controlled by a control section (not shown; for example, a control section 130 on the system described below with reference to FIG. 5). The following operation is possible: with the analog broadcasting selected, the switch is controlled to input the minimum gain value to the amplification section control signal input section, and with the digital broadcasting selected, the amplification section control signal is input to the input section.

During the analog reception, a digital demodulation IC is placed in a sleep mode.

That is, the above-described control section (not shown; for example, the control section 130 in FIG. 5) preferably places the logical section 33-2 or demodulation section 33, which constitutes the digital demodulation IC, in the sleep mode (power down). In this case, the control section acts as restricting means for restricting an AGC operation.

Thus, possible leakage from the digital IF signal line to the analog IF signal line can be avoided as described above. A gain signal G2 in FIG. 3 indicates a gain signal for IF_AGC improved by the above-described method. Thus, the analog broadcasting can be stably reproduced.

During the analog reception, the operation of ADC, core logic, and PLL in the digital demodulation IC is stopped.

Similarly, the above-described control section (not shown; for example, the control section 130 in FIG. 5) preferably stops the operation of the analog-to-digital converter 33-1, the logical section 33-2, which is a core logic, and PLL 33-3 during the analog reception; the analog-to-digital converter 33-1, the logical section 33-2, and PLL 33-3 belong to the demodulation section 33.

Thus, possible leakage from the digital IF signal line to the analog IF signal line can be avoided as described above. In this example, the demodulation section 33 performs substantially no operation but is not in the power down state. Thus, to be exact, the demodulation section 33 remains active. Consequently, when the analog broadcasting is switched to the digital broadcasting, a normal demodulation state can be recovered more quickly than in the sleep mode.

The digital IF signal and the analog IF signal are isolated from each other in the tuner.

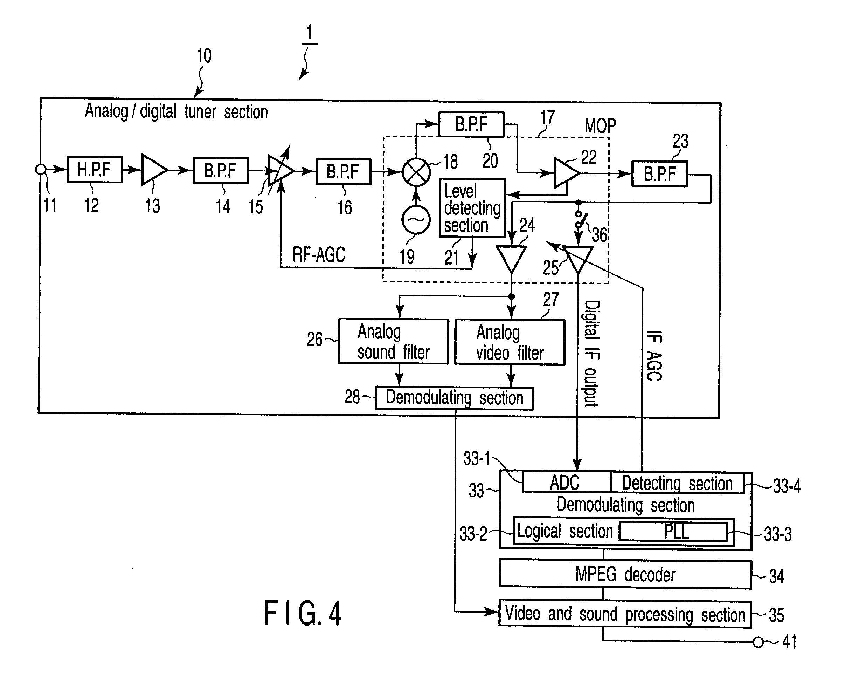

That is, the above-described control section (not shown; for example, the control section 130 in FIG. 5) preferably isolates the digital IF signal and the analog IF signal from each other inside the analog/digital tuber section 10 during the analog reception. For example, as shown in Figure 4, a switch 36 may be provided between the band pass filter 23 and the amplifier 25 and turned off by, for example, the control section 130 (FIG. 5) on the system upon the analog reception.

Alternatively, in distributing the digital IF and the analog IF, it is possible to enhance the isolation between the digital IF and the analog IF using SWIC, a distributing circuit, a distributor, or the like, to inhibit the digital IF and the analog IF from jumping into each other.

This makes it possible to avoid possible leakage from the digital IF signal line to the analog IF signal line, enabling stable reproduction of the analog broadcasting.

### <Embodiment of the Recording Apparatus>

Now, with reference to the drawings, description will be given of an example of a recording apparatus to which a broadcast receiving apparatus according to the above-described embodiment of the present invention is applied.

### (Configuration)

A video recording apparatus 100 shown in FIG. 5 has two types of disc drives. The video recording apparatus 100 has an optical disc drive 119 that rotationally drives an optical disc D as a first medium which is an information recording medium allowing video files to be constructed, to write and read information to and from the optical disc. Here, the optical disc D is HD DVD by way of example but is not limited to this. The video recording apparatus 100 has a hard disc drive 118 that drives a hard disc as a second medium. A control section 130 is connected to appropriate sections via a data bus so as to be responsible for all operations.

The video recording apparatus 100 has as main components an encoder 121 constituting a recording side, an MPEG decoder 134 constituting a reproducing side, and a control section 130 controlling the operation of the apparatus main body. The encoder 121 has a multiplying section 128 that encodes and multiplies data to provide the multiplied data. The MPEG decoder 134 receives signals from the hard disc drive 118 or the optical disc drive 119 to decode the signals. The MPEG decoder 134 has a buffer section 122 and an output separating section 129 for video and sound data.

The video recording apparatus 100 has a communication section 111 connected to a network such as a LAN, the analog/digital tuner section 10, and the demodulation section 33 succeeding the analog/digital tuner section 10. An antenna is connected to the analog/digital tuner section 10. The video recording apparatus 100 has a data editing section 120 that receives an output signal from the encoder 121 and executes desired data processing such as data edition on the signal to provide the processed data to the hard disc drive 118 or the optical disc drive 119. The data editing section 120 executes predetermined processing on signals from the hard disc drive 118 or the optical disc drive 119.

The video recording apparatus 100 has an OSD section 131 that synthesizes desired videos on a video screen, a sound video processing section 135, a selector 117 that selects an output device, and a programmed recording section 143 that generates a reservation list and a program table image. These sections are connected to the control section via the data bus. An output signal from the selector 117 is connected to an external receiver 141 or supplied to an external apparatus via an interface section 127 that communicates with the external apparatus.

The video recording apparatus 100 has an operation section 132 that receives the user's operation signals and operation signals from a remote controller R. The operation section is connected to the control section 130 via the data bus. In this case, the remote controller R enables operations almost equivalent to those of the operation section 132, provided in the main body of the video recording apparatus 100. The remote controller R makes it possible to instruct the hard disc drive 118 or the optical disc drive 119 to perform a recording operation or a reproducing operation, to give instructions on edition, to operate the tuner, and to make various settings such as the setting of programmed programming.

### (Operation)

A brief description will be given of a reproducing process and a recording process in the video recording apparatus 100 configured as described above, taking an operation for an optical disc by way of example. In the reproducing process for the optical disc, under the control of the control section 130, the optical disc D is rotated at a predetermined speed and irradiated with laser light. Reflected light from the optical disc is detected by an optical pickup. On the basis of the detection signal, an RF signal is generated. On the basis of the RF signal, data is reproduced.

In the recording process of the optical disc, under the control of the control section 130, for example, a video and sound signal supplied by the analog/digital tuner section 10 is provided to the encoder 121, which encodes and outputs the signal. Under the control of the control section 130, a laser driving current corresponding to the encoded output signal is supplied to the optical pickup, in which a semiconductor laser emits light. A storage area of the optical disc D is then irradiated with the laser light. The recording process is thus executed.

As described above, the analog/digital tuner section 10 according to the embodiment of the present invention is applicable to the video recording apparatus 100. However, the present invention is not limited to this aspect. The present invention covers a broad scope without departing from the disclosed principles or new features, and is not limited to the above-described embodiments.

## Claims

1. A broadcast receiving apparatus **characterized by** comprising:
a channel selection section (17) which receives a broadcast signal containing analog broadcasting and a broadcast signal containing digital broadcasting and which selects one of the broadcast signals;
a variable gain amplifier (25) which amplifies the broadcast signal selected by the channel selection section, in accordance with an input gain control signal;
a digital broadcast signal demodulator (33) which demodulates the broadcast signal amplified by the variable gain amplifier and which detects a signal level of the broadcast signal to provide a value based on a result of the detection to the variable gain amplifier as the gain control signal;
filters (26 and 27) which allow passage of an analog sound signal and an analog video signal contained in the broadcast signal selected by the channel selection signal; and
an analog broadcast signal demodulator (28) which demodulates the broadcast signals having passed through the filters,
wherein the digital broadcast signal demodulator (33) comprises a restricting section (33-2, 110) which restricts an operation of the variable gain amplifier if the channel selection section selects the analog broadcasting.

2. The broadcast receiving apparatus according to claim 1, **characterized in that** if the channel selection section selects the analog broadcasting, the restricting section (33-2) sets the gain control signal such that a gain of the variable gain amplifier has a minimum value.

3. The broadcast receiving apparatus according to claim 2, **characterized in that** if the channel selection section selects the analog broadcasting, the restricting section (33-2) stops a variable gain operation of the variable gain amplifier to set the gain to have the minimum value.

4. The broadcast receiving apparatus according to claim 1, **characterized in that** if the channel selection section selects the analog broadcasting, the restricting section (130) stops a power supply to the digital broadcast signal demodulator.

5. The broadcast receiving apparatus according to claim 1, **characterized in that** the digital broadcast signal demodulator (33) has an analog-to-digital converter (33-1) which subjects the broadcast signal amplified by the variable gain amplifier, to analog-to-digital conversion, a detection section (33-4) which detects the magnitude of the amplified broadcast signal and supplies a value based on a result of the detection to the variable gain amplifier as the gain control signal, and a logical section (33-2) which converts an OFDM signal into a TS video and sound signal, and
if the channel selection section (17) selects the analog broadcasting, the restricting section (130) stops operations of the analog-to-digital converter (33-1), the logical section (33-2), and a PLL circuit (33-3) included in the logical section (33-2) to stop feeding-back from the variable gain amplifier (25).

6. The broadcast receiving apparatus according to claim 1, **characterized by** further comprising a switch (36) provided between the channel selection section (17) and the variable gain amplifier (25) to control passage of the selected broadcast signal, and if the channel selection section selects the analog broadcasting, the restricting section (130) turns off the switch (36).

7. The broadcast receiving apparatus according to claim 1, **characterized in that** the filters (26 and 27) comprise:
the sound filter (26) which filters the broadcast signal selected by the channel selection section (17) to output a sound signal for the analog broadcasting; and
the sound filter (27) which filters the broadcast signal selected by the channel selection section (17) to output a video signal for the analog broadcasting.

8. A broadcast receiving method **characterized by** comprising:
receiving a broadcast signal containing analog broadcasting and a broadcast signal containing digital broadcasting and allowing a selection section (17) to select one of the broadcast signals;
allowing a variable gain amplifier (25) to amplify the selected broadcast signal in accordance with a gain control signal;
detecting a signal level of the selected broadcast signal and providing a value based on a result of the detection to the variable gain amplifier (25) as the gain control signal;
allowing a digital broadcast demodulator (33) to demodulate the amplified broadcast signal;
allowing the filters (26 and 27) to extract an analog sound signal and an analog video signal from the broadcast signal selected by the channel selection section (17);
allowing an analog broadcast signal demodulator to demodulate the broadcast signals extracted by the filters (26 and 27); and
if the channel selection section (17) selects the analog broadcasting, restricting an operation of the variable gain amplifier (25).

9. The broadcast receiving method according to claim 8, **characterized in that** the restricting step sets the gain control signal such that a gain of the variable gain amplifier (25) has a minimum value.

10. The broadcast receiving method according to claim 8, **characterized in that** the restricting step stops an operation of the amplification process to set the gain of the variable gain amplifier (25) to have the minimum value.
